(19) Europäisches Patentamt
European Patent Office
Office européen des brevets

(11) Veröffentlichungsnummer: **0 090 915**
**A1**

(12) **EUROPÄISCHE PATENTANMELDUNG**

(21) Anmeldenummer: 83100861.0

(22) Anmeldetag: 29.01.83

(51) Int. Cl.³: C 08 G 63/38
C 08 G 63/26, C 08 L 67/02
C 08 K 5/52

(30) Priorität: 31.03.82 DE 3211899

(43) Veröffentlichungstag der Anmeldung:
12.10.83 Patentblatt 83/41

(84) Benannte Vertragsstaaten:
CH DE FR GB IT LI NL

(71) Anmelder: CHEMISCHE WERKE HÜLS AG
- RSP Patente / PB 15 - Postfach 13 20
D-4370 Marl 1(DE)

(72) Erfinder: Horlbeck, Gernot, Dr.
In der Thiebrei 80
D-4358 Haltern(DE)

(72) Erfinder: Heuer, Horst
An der Landwehr 76
D-4358 Haltern(DE)

(54) **Verfahren zum Kondensieren von Poly(alkylenterephthalaten).**

(57) Verfahren zum Kondensieren von Poly(alkylenterephthalat) in fester Phase, wobei in Gegenwart von Estern der Phosphorigen Säure 25 bis 65°C unterhalb des Schmelzpunktes des Poly(alkylenterephthalats) unter Durchleiten eines Inertgasstromes gearbeitet wird.

EP 0 090 915 A1

# Verfahren zum Kondensieren von Poly(alkylenterephthalaten)

Gegenstand der Erfindung ist ein Verfahren zum Kondensieren von linearem Poly(alkylenterephthalat) mit einer Viskositätszahl von mindestens 50 $cm^3/g$ in fester Phase bei erhöhter Temperatur.

Poly(alkylenterephthalate), besonders Poly(ethylenterephthalat) (PETP) und Poly(butylenterephthalat) (PBTP), sind ausgezeichnete Werkstoffe zur Herstellung von Filmen, Folien, Formteilen etc.; insbesondere bei der Herstellung von Formteilen nach dem Spritzguß- und Extrusionsverfahren soll das Poly(alkylenterephthalat) eine Viskositätszahl $> 100$ $cm^3/g$ besitzen.

Die Poly(alkylenterephthalate) werden üblicherweise durch Um- oder Veresterung und anschließende Polykondensation von Terephthalsäure oder deren polyesterbildenden Derivaten und einem Alkandiol in Gegenwart von Katalysatoren hergestellt (Sorensen und Campbell, Preparative Methods of Polymer Chemistry, Interscience Publishers Inc., N.Y. 1961, Seiten 111 bis 127; Kunststoff-Handbuch, Band VIII, C. Hanser Verlag München 1973).

Nach diesen in der Schmelze durchgeführten Verfahren können so hohe Viskositäten, wie sie z. B. für Spritzguß- und Extrusionszwecke benötigt werden, nicht erreicht werden, da aufgrund der Temperaturbelastung in der Polykondensationsstufe bereits Abbaureaktionen einsetzen, so daß die gewünschte hohe Viskosität nicht erreicht werden kann.

Eine weitere Begrenzung der Viskosität der Polyester beim Schmelzkondensationsverfahren ergibt sich durch die mit fortschreitender Polykondensation zunehmende Viskosität

der Schmelze, die das Entweichen der flüchtigen, niedermolekularen Reaktionsprodukte erschwert bzw. unmöglich macht und dadurch den Polykondensationsfortschritt hemmt. Zudem bereitet es technische Schwierigkeiten, die hochviskose Schmelze aus dem Reaktionsgefäß auszutragen (DE-OS 21 17 748).

Sofern erforderlich wird eine Festphasennachkondensation durchgeführt (GB-PS 1 066 162, US-PS 3 405 098). Dies geschieht in der Weise, daß der Polyester in Granulat- oder Pulverform auf Temperaturen gebracht wird, die etwa 10 bis 60 °C unterhalb des Schmelzpunktes liegen. In diesem Temperaturbereich wird das Poly(alkylenterephthalat) so lange im Inertgasstrom oder unter Vakuum behandelt, bis die gewünschte hohe Viskosität erreicht ist.

Die Nachkondensation kann entweder diskontinuierlich, z. B. in einem Taumeltrockner (DE-OS 21 17 748), oder kontinuierlich, z. B. im Wirbelschichtverfahren (DE-OS 18 04 551) oder in einem Schneckenreaktor (DE-OS 21 62 618), durchgeführt werden.

Ein grundsätzlicher Nachteil der Festphasennachkondensation besteht in der langen Reaktionszeit bei erhöhter Temperatur; dies kann dazu führen, daß zwar ein Poly(alkylenterephthalat) mit der gewünschten Viskosität erhalten wird, dieses aber bereits so geschädigt ist, daß es bei der Verarbeitung aus der Schmelze stark abbaut. Aus solchem Material hergestellte Formteile sind spröde und brüchig.

Es wurde deshalb vorgeschlagen, zur Verkürzung der Nachkondensationszeit Poly(alkylenterephthalate) in gemahlener Form einzusetzen, jedoch ist dieses Verfahren nicht wirtschaftlich. Außerdem besteht die Gefahr der Zusammenbackens des Pulvers (DE-OSS 21 52 245 und 21 17 748).

Ein anderes Verfahren sieht vor, nach der Nachkondensation eine Umsetzung des Polyesters mit monofunktionellen Glycidylethern oder Carbonaten durchzuführen und somit die Stabilität des Polyesters zu verbessern (DE-OS 19 29 149). Dieses Verfahren ist zeitaufwendig und erfordert den Einsatz von polyesterfremden Substanzen.

Aufgabe der vorliegenden Erfindung war es, ein Festphasennachkondensationsverfahren zu entwickeln, bei dem in möglichst kurzer Zeit und unter Anwendung wirtschaftlicher Temperaturen das gewünschte hochmolekulare Poly(alkylenterephthalat) erhalten wird.

Die Aufgabe wurde dadurch gelöst, daß das Poly(alkylenterephthalat) bei Temperaturen, die 25 bis 65 °C unterhalb des Schmelzpunktes des eingesetzten Poly(alkylenterephthalts) liegen, unter Zusatz von 0,5 bis 5 Gew.-% - bezogen auf das Poly(alkylenterephthalat) - eines Esters aus Phosphoriger Säure und Phenolen, aliphatischen und cycloaliphatischen Alkoholen in einem Inertgasstrom kondensiert wird, wobei die pro Stunde durchgeleitete Inertgasmenge - gemessen unter Normbedingungen - dem 0,5- bis 1,5fachen des Reaktorbruttovolumens entspricht.

Als erfindungsgemäß einzusetzende Ester der Phosphorigen Säure kommen Verbindungen der allgemeinen Formel

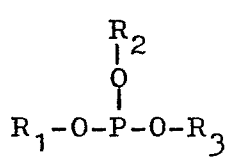

in Frage. $R_1$, $R_2$ und $R_3$ können gleich oder verschieden sein. Die Substituenten können einen linearen oder verzweigten Alkylrest oder einen unsubstituierten bzw. mit Alkyl-, Cyclohexyl-, Phenyl- oder Phenylalkyl-Gruppen substituierten Aryl- oder Cycloalkylrest bedeuten. In

den genannten Möglichkeiten besitzen die Alkylreste bzw. -gruppen 1 bis 12 C-Atome in der Kette. Die Cycloalkylreste können 5 bis 12 C-Atome im Ring enthalten.

Beispiele für Alkylreste sind die Methyl-, Ethyl-, Propyl-, i-Propyl-, t-Butyl-, Nonyl-, Dodecyl-Gruppe usw. Werden solche Ester verwendet, bei denen die Substituenten $R_1$ bis $R_3$ ausschließlich Alkylreste darstellen, so soll die Zahl der C-Atome aller drei Substituenten mindestens 12 betragen.

Beispiele für unsubstituierte bzw. mit Alkylgruppen substituierte Aryl- oder Cycloalkylreste sind die Phenyl-, $\alpha$- oder $\beta$-Naphthyl-, Cyclopentyl-, Cyclohexyl-, Cyclododecyl-, o-, m- bzw. p-Methylphenyl-, 2.4- oder 4.6-Dimethylphenyl-Gruppe usw.

Vorzugsweise werden unsubstituierte bzw. substituierte Arylphosphite eingesetzt. Als bevorzugte Einzelverbindungen sind Triphenylphosphit, Tris(kresyl)phosphit, Tris(t-butyl)phosphit und Tris(nonylphenyl)phosphit.

Die Ester der Phosphorigen Säure sind in Mengen von 0,5 bis 5 Gew.-%, vorzugsweise von 1 bis 3 Gew.-% - bezogen auf das Poly(alkylenterephthalat) - zugesetzt.

Die Reaktionstemperatur liegt erfindungsgemäß 25 bis 65 °C, vorzugsweise 35 bis 55 °C, unterhalb des Schmelzpunktes des eingesetzten Poly(alkylenterephthalats).

Als Inertgas kommt insbesondere der üblicherweise für Polykondensationsreaktionen verwendete Stickstoff in Frage. Andere Inertgase können jedoch gleichfalls eingesetzt werden. Die pro Stunde durchgeleitete Inertgasmenge entspricht - gemessen unter Normbedingungen - dem 0,5- bis 1,5fachen, vorzugsweise dem 0,6- bis 1,3fachen des Reaktorbruttovolumens.

Die Volumenangaben für die durchgeleitete Inertgasmenge beziehen sich nicht auf die jeweiligen Reaktionsbedingungen, sondern auf Normbedingungen, d. h. auf 0 °C und 1013 mbar.

Die für die erfindungsgemäße Nachkondensation geeigneten Poly(alkylenterephthalate), vorzugsweise Poly(ethylenterephthalat) und Poly(butylenterephthalat), werden nach den üblichen Schmelzpolykondensationsverfahren hergestellt. Sie sollen eine Viskositätszahl von mindestens 50 $cm^3/g$, vorzugsweise mindestens 65 $cm^3/g$, besitzen.

Bis zu 30 Mol-% der Terephthalsäure in den Poly(alkylenterephthalaten) können durch an sich bekannte andere Dicarbonsäuren ersetzt werden. Beispiele geeigneter Dicarbonsäuren sind Isophthalsäure, Phthalsäure, 1.4-Cyclohexandicarbonsäure, Adipinsäure, Sebazinsäure oder Decandicarbonsäure.

Die Diolkomponente wird durch Alkandiole mit 2 bis 12 C-Atomen in der Kohlenstoffkette gebildet; bevorzugt sind hierbei Ethylenglykol bzw. 1.4-Butandiol. Bis zu 30 Mol-% der Diolkomponente des jeweiligen Poly(alkylenterephthalats) können durch andere Diole, wie beispielsweise Neopentylglykol, 1.5-Pentandiol, 1.6-Hexandiol, 1.4- bzw. 1.3-Dimethylolcyclohexan oder 1.12-Dodecandiol, ersetzt sein.

Unter dem Begriff Poly(alkylenterephthalat) werden auch Blockcopolyester gerechnet. Derartige Produkte werden z. B. in Chimia 28 (9), Seiten 544 bis 552 (1974) und in Rubber

Chemistry and Technology 50, Seiten 688 bis 703 (1977) beschrieben. Diese Blockcopolyester enthalten neben den obengenannten aromatischen Dicarbonsäuren und Diolen ein Poly(oxyalkylen)diol mit einem Molgewicht im Bereich von etwa 600 bis 2 500. Bevorzugte Poly(oxyalkylen)diole sind Poly(oxyethylen)diol, Poly(oxypropylen)diol und Poly-(oxytetramethylen)diol. Der Anteil der Poly(oxyalkylen)-diole liegt im Bereich von 4 bis 40 Gew.-%, vorzugsweise von 10 bis 35 Gew.-% (bezogen auf den genannten Blockcopolyester).

Die Reaktionszeit für die erfindungsgemäße Festphasennachkondensation beträgt in Abhängigkeit von den genannten Parametern etwa 3 bis 10 h, vorzugsweise 5 bis 8 h.

Die in dem erfindungsgemäßen Verfahren eingesetzten linearen Poly(alkylenterephthalate) können Hilfs- und Zusatzstoffe enthalten. Hierfür kommen z. B. Nucleierungs-, Mattierungs-, Fließmittel oder andere Verarbeitungsmittel sowie Pigmente, Füll- und Verstärkungsstoffe o. ä. in Frage.

Nach dem erfindungsgemäßen Verfahren werden hochviskose, stabile Poly(alkylenterephthalate), die sich besonders für die Extrusionsverarbeitung eignen, in kürzerer Reaktionszeit und bei niedrigerer Temperatur als bei den bisher bekannten Verfahren hergestellt.

Die in der Beschreibung und in den Versuchen angeführten Parameter wurden mit Hilfe der nachstehend genannten Meßmethoden bestimmt:

Als Schmelzpunkt ($T_m$) wird das durch Differential-Thermocalorimetrie (DSC) ermittelte Schmelzmaximum des Polyesters bezeichnet (Aufheizgeschwindigkeit 16 °C/min).

Die Viskositätszahlen (J) wurden an Lösungen von 0,23 g Poly(alkylenterephthalat) in 100 ml Phenol/1.1.2.2-Tetrachlorethan (Gewichtsverhältnis 60 : 40 ) bei 25 °C gemessen.

Die angegebenen Stickstoffmengen sind unter Normbedingungen - 0 °C und 1013 mbar - gemessen worden.

Mit Buchstaben gekennzeichnete Versuche sind nicht erfindungsgemäß.

Beispiele

Versuche 1 bis 3

120 kg Poly(butylenterephthalat) (J = 92 $cm^3/g$; $T_m$ = 225 °C) werden in einem 0.5 $m^3$-Taumeltrockner mit der in Tabelle 1 angegebenen Menge Triphenylphosphit versetzt, im Stickstoffstrom (Durchsatz siehe Tabelle 1) auf die Reaktionstemperatur (siehe Tabelle 1) erhitzt und 10 Stunden bei diesen Bedingungen kondensiert.

Versuch A

Wie in den Versuchen 1 bis 3 werden 120 kg eines Poly(butylenterephthalats) im 0.5 $m^3$-Taumeltrockner ohne Zusatz von Triphenylphosphit bei 180 °C und 0.5 $m^3/h$ $N_2$ 10 Stunden nachkondensiert.

Versuche 4 bis 7

Jeweils 50 g granuliertes Poly(butylenterephthalat) (J = 92 $cm^3/g$; $T_m$ = 225 °C) werden in einen 250 $cm^3$-Rundkolben gegeben und mit 2 Gew.-% Triphenylphosphit versetzt. Bei der in Tabelle 2 angegebenen Temperatur wird das Granulat im $N_2$-Strom (0.25 l/h) unter Drehen des Kolbens 5 Stunden nachkondensiert.

Versuche B und C (Tabelle 2)

Jeweils 50 g Granulat des auch für die Versuche 4 bis 7 verwendeten Poly(butylenterephthalats) werden ohne Zusatz von Triphenylphosphit unter sonst gleichen Bedingungen nachkondensiert.

Versuche 8 bis 11 (Tabelle 3)

Jeweils 50 g granuliertes Poly(butylenterephthalat) ($J = 92\ cm^3/g$; $T_m = 225\ ^oC$) werden in einen 250 $cm^3$-Rundkolben gegeben und mit verschiedenen Mengen an Triphenylphosphit versetzt. Anschließend wird die Temperatur auf 180 °C erhöht und die Probe bei dieser Temperatur im $N_2$-Strom (0.25 l/h) unter Drehen des Kolbens 5 Stunden nachkondensiert.

Versuche 12 und 13 (Tabelle 4)

50 g Poly(butylenterephthalat) ($J = 88\ cm^3/g$; $T_m = 225\ ^oC$) werden nach dem Verfahren der Versuche 3 bis 7 bei 180 °C und 0.25 l/h im $N_2$-Strom in Gegenwart der angegebenen Triphenylphosphit-Mengen nachkondensiert; nach 1, 3 und 5 Stunden werden Proben gezogen, deren Lösungsviskositätszunahme als Maß des Kondensationsfortschrittes bestimmt wird.

Versuche 14 bis 17 (Tabelle 5)

In diesen Versuchen werden Poly(ethylenterephthalat) und verschiedene Copolyester unter den in Tabelle 5 angegebenen Reaktionsbedingungen erfindungsgemäß nachkondensiert.

Tabelle 1

Verfahrensmaßnahmen

| Versuch | Triphenylphosphit Zusatz [Gew.-%] | $N_2$-Durchsatz [$m^3$/h] | Reaktionstemperatur [°C] | J [$cm^3$/g] |
|---|---|---|---|---|
| 1 | 2 | 0.5 | 190 | 158 |
| 2 | 2 | 0.5 | 180 | 145 |
| 3 | 1.5 | 0.3 | 180 | 135 |
| A | - | 0.5 | 180 | 107 |

Tabelle 2

Einfluß der Reaktionstemperatur auf die Kondensation von PBTP

| Versuch | Reaktionstemperatur [°C] | J [$cm^3/g$] |
|---|---|---|
| 4 | 195 | 168 |
| 5 | 185 | 141 |
| 6 | 175 | 136 |
| 7 | 165 | 124 |
| B | 175 | 95 |
| C | 165 | 92 |

Tabelle 3

Einfluß der Phosphit-Menge

| Versuch | Triphenylphosphit Zusatz [Gew.-%] | J [$cm^3/g$] |
|---|---|---|
| 8 | 1 | 132 |
| 9 | 1.5 | 135 |
| 10 | 2.5 | 135 |
| 11 | 3 | 130 |

Tabelle 4

Zeitabhängigkeit der Kondensation

| Versuch | Triphenylphosphit Zusatz [Gew.-%] | J [$cm^3/g$] nach 1 | 3 | 5 Stunden |
|---|---|---|---|---|
| 12 | 2 | 109 | 122 | 142 |
| 13 | 3 | 116 | 125 | 137 |

<u>Tabelle 5</u>

| Versuch | Polyester | Phosphit Zusatz [Gew.-%] | Kondensationsbedingungen T [°C] | N2 [l/h] | t [h] | J [$cm^3/g$] |
|---|---|---|---|---|---|---|
| 14 | Poly(ethylenterephthalat) $J = 65\ cm^3/g$; $T_m = 255\ °C$ | 2.5 Tri-o-kresylphosphit | 210 | 0.15 | 4 | 104 |
| 15 | Copolyester aus Terephthalsäure/Isophthalsäure//Butandiol = 90/10//100 Mol-% $J = 85\ cm^3/g$; $T_m = 213\ °C$ | 1.5 Triphenylphosphit | 175 | 0.3 | 6 | 128 |
| 16 | Copolyester aus Terephthalsäure/Sebacinsäure//Butandiol-(1.4) = 85/15//100 Mol-% $J = 86\ cm^3/g$; $T_m = 207\ °C$ | 1.5 Diphenyl-decylphosphit | 165 | 0.35 | 7 | 133 |

Fortsetzung Tabelle 5

| Versuch | Polyester | Phosphit Zusatz [Gew.-%] | Kondensationsbedingungen T [°C] | $N_2$ [l/h] | t [h] | J [$cm^3$/g] |
|---|---|---|---|---|---|---|
| 17 | Blockcopolyester aus Terephthalsäure//Butandiol-(1.4)/Poly(oxytetramethylen)diol ($\bar{M}_n$ = 1 000) = 100//97/3 Mol-% J = 90 $cm^3$/g; $T_m$ = 217 °C | 1.0 Diphenyl-p-t-butylphenylphosphit | 180 | 0.2 | 4 | 152 |

Patentansprüche:

1. Verfahren zum Kondensieren von linearem Poly(alkylenterephthalat) mit einer Viskositätszahl von mindestens 50 $cm^3/g$ in fester Phase bei erhöhter Temperatur, dadurch gekennzeichnet, daß das Poly(alkylenterephthalat) bei Temperaturen, die 25 bis 65 °C unterhalb des Schmelzpunktes des eingesetzten Poly(alkylenterephthalats) liegen, unter Zusatz von 0,5 bis 5 Gew.-% - bezogen auf das Poly(alkylenterephthalat) - eines Esters aus Phosphoriger Säure und Phenolen, aliphatischen und cycloaliphatischen Alkoholen in einem Inertgasstrom kondensiert wird, wobei die pro Stunde durchgeleitete Inertgasmenge - gemessen unter Normbedingungen - dem 0,5- bis 1,5fachen des Reaktorbruttovolumens entspricht.

2. Verfahren nach Anspruch 1, dadurch gekennzeichnet, daß das Poly(alkylenterephthalat) bei Temperaturen, die 35 bis 55 °C unterhalb des Schmelzpunktes des eingesetzten Poly(alkylenterephthalats) liegen, kondensiert wird.

3. Verfahren nach Anspruch 1 und 2, dadurch gekennzeichnet, daß das Poly(alkylenterephthalat) 1 bis 3 Gew.-% eines Phosphorigsäureesters zugesetzt enthält.

4. Verfahren nach Anspruch 1 bis 3, dadurch gekennzeichnet, daß die pro Stunde durchgeleitete Inertgasmenge dem 0,6- bis 1,3fachen des Reaktorbruttovolumens entspricht.

Europäisches Patentamt

# EUROPÄISCHER RECHERCHENBERICHT

0090915
Nummer der Anmeldung

EP 83 10 0861

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | EP-A-0 031 469 (CHEMISCHE WERKE HÜLS AG) * Ansprüche 1, 2, 5 * | 1,2,4 | C 08 G 63/38<br>C 08 G 63/26<br>C 08 L 67/02<br>C 08 K 5/52 |
| Y | DE-A-2 703 855 (CIBA-GEIGY AG) * Ansprüche 1, 2, 7-9, 14-16 * | 1,2,4 | |
| D,A | DE-A-2 117 748 (SANDOZ AG) * Ansprüche * | 1,2 | |
| A | DE-A-1 544 986 (GOODYEAR TIRE AND RUBBER CO.) * Ansprüche 2-4, 6, 9, 10; Beispiele 1, 2 * | 1 | |
| A | GB-A- 978 304 (IMPERIAL CHEMICAL INDUSTRIES LTD.) * Ansprüche 1-4; Seite 2, Zeilen 60-68 * | 1 | RECHERCHIERTE SACHGEBIETE (Int. Cl. 3)<br>C 08 G 63/00<br>C 08 K 5/52<br>C 08 L 67/02 |

Der vorliegende Recherchenbericht wurde für alle Patentansprüche erstellt

| Recherchenort | Abschlußdatum der Recherche | Prüfer |
|---|---|---|
| BERLIN | 29-06-1983 | HASS C V F |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03.82